# EUROPÄISCHE PATENTANMELDUNG

(11) **EP 0 871 280 A1**
(43) Veröffentlichungstag der Anmeldung: **14.10.1998**
(21) Anmeldenummer: 98100964.0
(22) Anmeldetag: 21.01.1998
(51) Int. Cl.: H02K 7/08, H02K 5/167

(54) **Aggregat mit einem Elektromotor und einem Schneckengetriebe**

(30) Priorität: 07.04.1997 DE 19714237
(71) Anmelder: ROBERT BOSCH GMBH, 70442 Stuttgart (DE)
(72) Erfinder: Tasch, Franz, 76287 Rheinstetten (DE); Haussecker, Walter, 77830 Bühlertal (DE); Freund, Stefan, 76571 Gaggenau (DE); Buschle, Hartmut, 70736 Fellbach (DE)

(57) **Zusammenfassung**

Bekannt ist ein Aggregat mit einem Aggregatgehäuse und darin einem Elektromotor und einem Schneckengetriebe und wenigstens einem axial elastischen Axiallager für die Schneckenwelle im Bereich eines an den Elektromotor angrenzenden halsartigen Fortsatzes (24) des Aggregatgehäuses (20).

Demgegenüber wird vorgeschlagen, ein zu dem Axiallager (32) gehörendes Federelement (34) aus einem Blech eines Federwerkstoffes herzustellen, so daß dieses Federelement (34) eine mittlere eine Gleitlagerfläche zur Verfügung stellende Zone (36), gegen das Wellenende (28) gerichtete Federkräfte erzeugende Federzungen (38) und von der mittleren Zone (36) im wesentlichen strahlenartig abstehende Zentrierzungen (40) aufweist.

## Beschreibung

### Stand der Technik

Die Erfindung geht aus von einem Aggregat mit Elektromotor und mit Schneckengetriebe nach der Gattung des Hauptanspruchs.

Durch die Druckschrift EP 0 655 358 A1 ist ein gattungsgemäßes Aggregat bekannt, das beispielsweise zum Verstellen bzw. Bewegen von einem zu einem Kraftfahrzeug gehörenden Bauteil wie Fensterscheibe, Sitz oder Wischerblatt verwendbar ist und bei dem ein Axiallager, das sich vom Anker des Elektromotors aus gesehen hinter einem Radiallager befindet, axial elastisch ausgebildet ist und hierfür als ein Federelement ein scheibenförmiges gummielastisches Element, das an einem Gehäuseboden abgestützt ist, und zwischen diesem scheibenförmigen gummielastischen Element und einem durch das Radiallager ragenden Wellenende eine Anlaufscheibe, die beispielsweise aus Kunststoff besteht, aufweist. Die Anlaufscheibe und das Wellenende oder ein in dieses eingesetzter Pilz, Kugel oder dergleichen bilden ein Axialgleitlager. Vor dem Einbauen des Radiallagers, das beispielsweise als eine gesinterte Gleitlagerbuchse ausgebildet ist, werden zuerst das scheibenförmige gummielastische Element und dann die Anlaufscheibe eingebaut.

### Vorteile der Erfindung

Das Aggregat mit den kennzeichnenden Merkmalen des Anspruchs 1 hat den Vorteil, daß vor dem Einbauen des Radiallagers nur ein Bauteil, das einerseits das Federelement und andererseits die Anlaufscheibe bildet, in das Aggregatgehäuse einzuführen ist.

Durch die in den Unteransprüchen aufgeführten Maßnahmen sind vorteilhafte Weiterbildungen und Verbesserungen des im Hauptanspruch angegebenen Aggregates möglich.

Die kennzeichnenden Merkmale des Anspruchs 2 ergeben den Vorteil, daß zur Montage des Federelementes in das Aggregatgehäuse das Federelement von unten her mit Montagerichtung nach oben einführbar ist und dann in einem Aufnahmeloch des Aggregatgehäuses sich selbst hält, dank der anspruchsgemäßen Ausrichtung der Zentrierzungen und der durch die Wahl der Abmessungen zustandekommenden elastischen Verspannung.

Das kennzeichnende Merkmal des Anspruchs 3 ergibt den Vorteil, daß die Federenden nach Art von Gleitschuhen ausgebildet sind und dieserart unabhängig von gegebenenfalls unvermeidlichen Stanzgraten das Gleiten der Federenden in radialen Richtungen begünstigen und dabei einem Verschleiß am Gehäuseboden entgegenwirken.

### Zeichnung

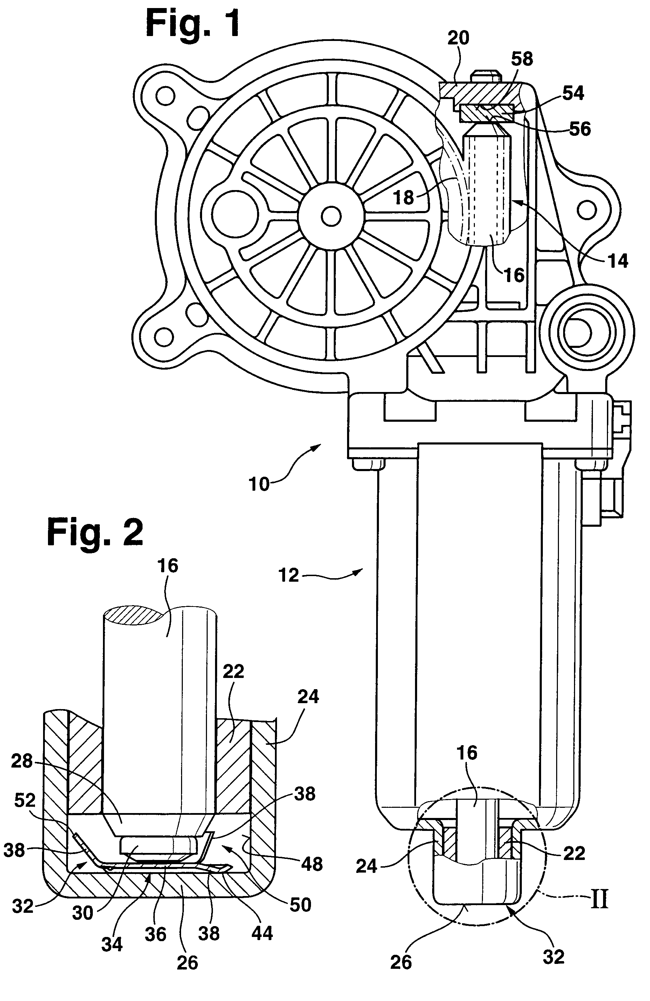

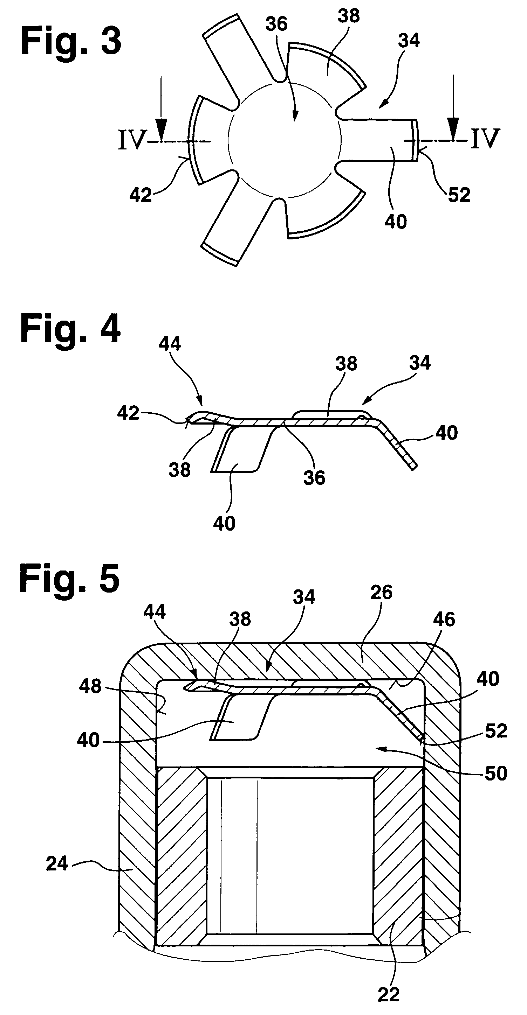

Ein Ausführungsbeispiel der Erfindung ist in der Zeichnung dargestellt und nachfolgend näher beschrieben. Es zeigen Figur 1 das erfindungsgemäße Aggregat in teilweise aufgeschnittenem Zustand, Figur 2 eine Ausschnittsvergrößerung im Längsschnitt für ein erfindungswesentliches Bauteil des Aggregates der Figur 1, Figur 3 das erfindungsgemäße Bauteil im Grundriß, Figur 4 das erfindungswesentliche Bauteil im Längsschnitt und Figur 5 das erfindungswesentliche Bauteil im Aggregatgehäuse vor Fertigstellung des Aggregates.

### Beschreibung des Ausführungsbeispiels

Ein in der Figur 1 dargestelltes Aggregat 10 dient, wie bereits in der Beschreibungseinleitung erwähnt, beispielsweise zum Verstellen bzw. Bewegen von zu einem Kraftfahrzeug gehörenden Bauteilen. Es weist deshalb einen drehrichtungsumkehrbaren Elektromotor 12 auf, dem ein als Schneckengetriebe 14 ausgebildetes Untersetzungsgetriebe nachgeordnet ist. Das Schneckengetriebe 14 hat eine Schneckenwelle 16 und eine dieser kämmendes Schneckenrad 18, das eine hier nicht dargestellte Abtriebswelle mit beispielsweise einem Fensterhebermechanismus verbindet. Die Schneckenwelle 16 bildet mit einem nicht sichtbaren mittleren Abschnitt eine Ankerwelle des Elektromotors 12. Das Aggregat weist ein mehrteiliges Aggregatgehäuse 20 auf, das sowohl den Elektromotor 12 als auch das Schneckengetriebe 14 umschließt. Die Schneckenwelle ist beispielsweise mittels zwei Radiallagern gelagert, von denen ein Radiallager 22 die größere Entfernung vom Schneckenrad 18 aufweist und dabei in einem halsartigen Fortsatz 24 des Aggregatgehäuses 20 angeordnet ist. Stirnseitig ist der halsartige Fortsatz 24 verschlossen mittels eines Gehäusebodens 26. Ein gegen den Gehäuseboden 26 zeigendes Wellenende 28 oder ein im Beispiel in das Wellenende 28 eingesetzter Pilz 30 aus beispielsweise Kunststoff gehören zu einem Axiallager 32. Zu dem Axiallager gehört des weiteren ein Federelement 34.

Das Federelement 34 ist in einem anderen Maßstab in den Figuren 3 und 4 dargestellt. Es besteht aus einem Federblech, wobei es dem Konstrukteur freigestellt ist, härtbares Stahlblech oder aber ein Bronzeblech auszuwählen, und weist eine mittlere, im wesentlichen ebene kreisrund umgrenzte Zone 36 und von dieser ausgehend in dem Beispiel drei Federzungen 38 und der gewählten Zahl drei Federzungen 38 entsprechend drei zwischen den Federzungen 38 ebenfalls von der mittleren Zone 36 ausgehend drei Zentrierzungen 40 auf, wie dies am besten in der Figur 3 ersichtlich ist. Wie in der Figur 4 dargestellt, sind die Federzungen 38 aus einer Bezugsebene der mittleren Zone 36 herausgebogen, und zwar hier gemäß der Figur 4 nach schräg oben. In mit zur Erfindung gehörender Weise sind die Zentrierzungen 40 in entgegengesetztem Sinne aus der Bezugsebene der mittleren Zone 36 gebogen und demgemäß in der Figur 4 nach schräg unten zeigend dargestellt. In zur Erfindung gehörender Weise weisen freie Enden 42 der Federzungen 38 Biegungen 44 auf. Die Biegungen 44 sind dazu bestimmt, im Kontakt mit einer Innenfläche 46 des in der Figur 5 vergrößert dargestellten Gehäusebodens 26 zu gleiten. In der Figur 5 ist der halsartige Fortsatz 24 des Aggregatgehäuses 20 mit dem Boden 26 nach oben dargestellt. Dies ist die Ausrichtung des Aggregatgehäuses 20 während des Einbauens des Federelementes 34. Beim Einbauen des Federelementes 34 senkrecht von unten nach oben fehlt zunächst das in der Figur 5 dargestellte Radiallager 22. In der Figur 5 ist erkennbar, daß sich das Federelement 34 selbst hält an einer Oberfläche 48 eines Loches 50, das sich in dem halsartigen Fortsatz 24 befindet. Zu diesem Zweck sind konstruktiv freie Enden 52 der Zentrierzungen 40 auf einen Bezugsdurchmesser gelegt, der größer ist als der Durchmesser des Loches 50.

Nach dem Einfuhren des Federelementes 34 in das Loch 50 ist das Radiallager 22, hier als eine Gleitlagerbuchse ausgebildet, einbaubar. Das Einbauen des Radiallagers 22 erfolgt ebenfalls senkrecht von unten nach oben.

Nach dem Einbau des Gleitlagers 22 ist das Wellenende 28 samt der Schneckenwelle 16 montierbar. Dies erfolgt vorzugsweise in einer Ausrichtung des Aggregatgehäuses 20 in der in der Figur 1 dargestellten Ausrichtung, wobei nunmehr der Gehäuseboden 26 unten ist.

Zur Montage des Aggregates 10 gehört noch das Einsetzen einer Anlaufscheibe 54 zwischen ein nahe dem Schneckenrad 18 befindliches Ende 56 der Schneckenwelle 16 und dem mehrteiligen Aggregatgehäuse 20. Zu diesem Zweck weist das Aggregatgehäuse im Bereich des Endes 56 im Aggregatgehäuse 20 eine nutartige Ausnehmung 58 auf, die eine gedachte Verlängerung der Achse der Schneckenwelle 16 kreuzt. Die Anlaufscheibe erfüllt sowohl die Aufgabe eines Axialgleitlagerbestandteiles als auch eines Toleranzausgleichelementes zu dem Zweck, daß nach dem Einfügen der Anlaufscheibe 54 in die Ausnehmung 58 das Federelement 34 eine gewollte Verspannung aufweist. Diese Verspannung sorgt im axial unbelasteten Zustand der Schneckenwelle 16 dafür, daß sich zwischen dem Federelement und der Schneckenwelle und auch zwischen der Anlaufscheibe 54 und der Schneckenwelle 16 kein Spiel befindet. Zur elastischen Verspannung des Federelementes 34 gehört auch eine elastische Verformung der mittleren Zone 36 mit der gewollten Folge, daß die Federzungen 38 ihre in der Figur 5 dargestellte Ausrichtung, nämlich die Anlage der freien Enden 52 an der Oberfläche 48 des Loches 50, verlieren, so daß nunmehr, wie in der Figur 2 dargestellt, die freien Enden 52 radiale Abstände von der Oberfläche 48 des Loches 50 haben. Dadurch ist die mittlere Zone 36 des Federelementes 34 in axialer Richtung zum Gehäuseboden 26 und von ihm weg beweglich. Mit ihm hat die Schneckenwelle 16 bei einer die eingebaute Vorspannung überschreitenden axialen Belastung die Möglichkeit, sich in Richtung des Gehäusebodens 26 zu bewegen, wobei natürlich die in dem Federelement 34 herrschende Verspannung zunimmt. Insoweit ist hier technische Übereinstimmung vorhanden mit dem in der Beschreibungseinleitung genannten gummielastischen scheibenförmigen Federmittel. In den Figuren 2 und 5 ist klar erkennbar, daß für die axial elastische Lagerung der Schneckenwelle 16 lediglich nur noch ein einziges Bauteil in den halsartigen Fortsatz 24 zu dessen Gehäuseboden 26 hin einzuführen ist. Dies erspart Montagezeit und verkürzt gegebenenfalls die Montagelinie.

In der Figur 3 ist, wie beschrieben, das erfindungsgemäße Bauteil, nämlich das Federelement 34, dargestellt mit drei Federzungen 38 und mit drei Zentrierzungen 40, so daß in Umfangsrichtung des Federelementes 34 Federzungen 38 und Zentrierzungen 40 sich einander abwechseln. Die Anordnung von jeweils drei Zungen eines Typs macht einerseits ein Stanzwerkzeug preisgünstig und sichert andererseits das Federelement 34 gegen unerwünschtes Kippen. Es steht jedoch dem Fachmann frei, mehr Federzungen 38 bzw. Zentrierzungen 40 zu verwenden.

Das Federelement 34 ist beispielsweise aus Federstahlblech herstellbar oder aus einem anderen Federwerkstoff des Standes der Technik. Beispielsweise kommt in Betracht hartgewalztes Messingblech oder Bronzeblech.

## Patentansprüche

1. Aggregat mit einem Aggregatgehäuse und darin angeordnet einem Elektromotor und einem Schneckengetriebe, das ein Schneckenrad und eine Schneckenwelle aufweist, wobei eine Welle sowohl eine Ankerwelle als auch eine Schneckenwelle bildet, und mit beidendig der Welle angeordneten Axiallagern, von denen wenigstens eines axial elastisch ausgebildet und im Aggregatgehäuse abgestützt ist und ein Federelement aufweist, dadurch gekennzeichnet, daß das Federelement (34) aus einem Federblech besteht mit einer mittleren im wesentlichen kreisrund umgrenzten Zone (36), die eine gegen die Welle (16) gerichtete Gleitfläche bildet, mit von der Zone (36) strahlenartig ausgehenden Federzungen (38), die aus einer Bezugsebene der Zone (36) winkelig weggebogen sind, um sich mit ihren freien Enden (42, 44) an einer inneren Fläche (46) eines zum Aggregatgehäuse (20) gehörenden Gehäusebodens (26) abzustützen, und mit von der Zone (36) strahlenartig ausgehenden Zentrierzungen (40).

2. Aggregat nach Anspruch 1, dadurch gekennzeichnet, daß von der Bezugsebene der Zone (36) ausgehend die Zentrierzungen (40) bezüglich der Federzungen (38) entgegengesetzt winkelig gebogen sind, und daß freie Enden (52) der Zentrierzungen (40) des Federelements (34) im nicht eingebauten Zustand auf einem gedachten Kreis liegen, dessen Durchmesser größer ist als der Durchmesser eines Loches (50), in das das Federelement (34) eingesetzt wird, wobei durch axiale Belastung des Federelementes (34) mittels der Welle (16) die freien Enden (52) der Zentrierzungen sich auf einen gedachten Kreis bewegen, dessen Durchmesser (40) geringer als der Durchmesser des Loches (50) ist.

3. Aggregat nach Anspruch 1 oder 2, dadurch gekennzeichnet, daß die Federzungen (38) an ihren freien Enden (42) Biegungen (44) aufweisen, die zur Anlage an der inneren Fläche (46) des Gehäusebodens (26) bestimmt sind.
